Europäisches Patentamt

European Patent Office

Office européen des brevets

(19)

(11) Veröffentlichungsnummer: **0 157 379**
**B1**

(12) # EUROPÄISCHE PATENTSCHRIFT

(45) Veröffentlichungstag der Patentschrift:
**13.09.89**

(21) Anmeldenummer: **85103782.0**

(22) Anmeldetag: **29.03.85**

(51) Int. Cl.⁴: **B 60 N 3/00,** B 60 N 1/00,
B 68 G 5/02

(54) **Polsterkörper, insbesondere für Fahrzeuge.**

(30) Priorität: **03.04.84 DE 3412360**

(43) Veröffentlichungstag der Anmeldung:
**09.10.85 Patentblatt 85/41**

(45) Bekanntmachung des Hinweises auf die Patenterteilung:
**13.09.89 Patentblatt 89/37**

(84) Benannte Vertragsstaaten:
**DE FR GB IT SE**

(56) Entgegenhaltungen:
**DE-A-1 654 255**
**DE-A-1 685 179**
**DE-A-2 253 265**
**DE-U-7 010 987**
**GB-A-1 177 122**

(73) Patentinhaber: **Gebr. Happich GmbH, Postfach 10
02 49 Clausenbrücke 1, D-5600 Wuppertal 1 (DE)**

(72) Erfinder: **Wolff, Martin, Felderbachstrasse 119 A,
D-4320 Hattingen (DE)**
Erfinder: **Brüggemann, Armin, Birkenhöhe 2, D-5600
Wuppertal 1 (DE)**

EP 0 157 379 B1

## Beschreibung

Die Erfindung bezieht sich auf einen Polsterkörper, insbesondere für Fahrzeuge, mit einer formstabilen aus Blech oder einem Kunststoffspritzling bestehenden Einlage und mit einer die Einlage außenseitig ungebenden Schicht aus Schaumkunststoff, die durch eine aus einer Kunststoffhaut gebildeten Hüllfolie abgedeckt ist, wobei die Auflageseite des Polsterkörpers im wesentlichen hüllfolienfrei ausgeführt ist.

Polsterkörper mit einer Einlage werden insbesondere in Fahrzeugen als Innenteile weitverbreitet verwendet, und zwar als Armaturentafeln, Handschuhkastendeckel, Prallkörper, Haltegriffe, Armlehnen, Armlehnen-Haltegriff-Kombinationen und ähnlichem. Die DE-U-7 010 987 z. B., beschreibt einen als Sicherheitskopfstütze ausgebildeten Polsterkörper, der progressiv stoßschluckend aufgebaut ist, dadurch, daß ein Weichpolsterkörper als Einlage einen verdichteten Kern aus Gummihaar oder Chemiefasern aufweist, in dem der den Weichpolsterkörper bildende Frischschaum durch Zusammenbruch der Zellwände eine filmbildende Zone geschaffen hat, die einen zusätzlichen flächigen Schutz, der einen von außen wirkenden Druck stoßschluckend und verteilend auf den Kern überträgt, bildet. Die Polsterkörper sind im allgemeinen an ihrer als Anschlußfläche dienenden Rückseite folienfrei ausgebildet, daß heißt an der Rückseite der Polsterkörper ist jeweils die Einlage und der Schaumkunststoff sichtbar. Diese herkömmliche Ausgestaltung der Polsterkörper bringt zum einen herstellungstechnische Probleme mit sich und verursacht zum anderen Schwierigkeiten, wenn der Polsterkörper an eine Anschlußfläche befestigt werden soll.

Polsterkörper der in Rede stehenden Art werden im allgemeinen dadurch hergestellt, daß eine separat gefertigte Einlage in eine vorgefertigte Hüllfolie (Kunststoffhaut) eingefädelt und zusammen mit dieser in das Formnest einer durch einen Deckel verschließbaren Schäumform eingesetzt wird, wonach in den Hohlraum der Hüllfolie schäumbares Material eingegossen wird welches sich in dem Raum zwischen der Einlage und der Hüllfolie und dem die Drückseite des Polsterkerns bildenden Bereich der Schäumform ausdehnt. Beim Ausschäumen ist es praktisch nicht möglich und aus technischen Gründen auch nicht erwünscht, einen engen und physisch vollkommenen Kontakt zwischen Einlage und Hüllfolie und der Schäumform bzw. dem Schäumformdeckel herbeizuführen, wodurch oftmals ein Überquellen des schäumbaren Materials verursacht wird, welches Material sich dann an der Außenseite der Hüllfolie und/oder an der Innenseite der Einlage festsetzt. Diese Erscheinung verursacht dann zumindest Nachbearbeitungsmaßnahmen zur Entfernung des übergetretenen Schaummaterials, manchmal aber auch eine ungleichförmige Aufschäumung die Bildung von Leerstellen oder Kohlräumen, eine ungleichförmige Festigkeit der Schaumschicht usw., wodurch der Anteil an Ausschuß oder minderwertiger Erzeugnisse erhöht wird.

Der geschilderte Schaumübertritt und der Umstand, daß die Polsterkörperrückseite durch Wandungsbereiche der Schäumform geformt wird, erschwert aber auch das Ausformen der Polsterkörper aus der Schäumform wesentlich, weshalb es im allgemeinen erforderlich ist, sowohl die Hüllfolie als auch die Schäumform vor dem Schäumvorgang mit Trennmittel zu besprühen was zusätzliche Material- und Arbeitkosten verursacht.

Schließlich bestehen bei Polsterkörpern herkömmlicher Bauart, wie schon erwähnt, auch Montageprobleme, was auf die Weichheit des Schaumkunststoffes auch an der Anlagekontur (Polsterkörperrückseite) zurückzuführen ist. Oftmals werden die Polsterkörper, um die Befestigungsstellen den Blicken eines Betrachters zu entziehen, schräg von unten an eine Karosseriewand angeschraubt. Daraus ergibt sich aber das Problem, daß sich die weiche obere Anlagekontur einzieht und sich unschöne Falten bilden.

Es ist nun Aufgabe der Erfindung einen Polsterkörper der eingangs näher definierten Art derart zu verbessern und zu gestalten, daß durch konstruktive Maßnahmen am Polsterkörper die Herstellung desselben durch Vermeidung eines rückseitigen Schaumaustritts vereinfacht und die bisherige Notwendigkeit, bei der Herstellung Trennmittel einzusetzen, entbehrlich wird und daß der Polsterkörper darüber hinaus montiert werden kann, ohne daß dabei die Gefahr von Einziehungen oder Faltenbildungen auftritt.

Diese Aufgabe wird der Erfindung zufolge dadurch gelöst, daß der auflageseitige Randzonenbereich der Polsterschicht ganz oder teilweise aus einem zusätzlich im Schaumkunststoffmaterial verankerten Körper aus weichelastischem, luftdurchlässigem Material besteht, welcher sowohl fest an der Außenseite der Einlage als auch fest an der Innenseite der Hüllfolie anliegt und bereichsweise, d. h. zur Auflageseite hin abnehmend vom Schaumstoffmaterial durchsetzt ist.

Der erfindungsgemäßen Problemlösung gingen folgende Überlegungen voraus: Wenn die Hüllfolie als dichtes Element betrachtet wird, so ergibt sich die Notwendigkeit, daß die beim Schäumen verdrängte Luft an den offenen Bereichen entweichen kann, da sonst Lunker und nicht mit Schaummaterial ausgefüllte Bereiche im Fertigteil entstehen. Um fertigungstechnisch sicher zu gehen, daß der Polsterkörper komplett ausgeschäumt wird, wird in der Praxis mit einer leicht erhöhten Füllmenge gefahren. Der Schaumüberschuß wirkt sich verdichtend auf den Schaum im Teil aus oder er tritt mit den weiter oben geschilderten nachteiligen Folgen aus den offenen Hüllfolienbereichen aus.

Durch die erfindungsgemäße Maßnahme wird nun erreicht, daß einerseits zwar die beim Schäumen verdrängte Luft durch den Körper aus luftdurchlässigem Material entweichen kann, daß andererseits aber der Körper aus luftdurchlässigem Material den Schaum daran hindert aus den offenen Bereichen auszutreten. Es erfolgt demgemäß über den Körper aus luftdurchlässigem Material eine Abdichtung mit Filterwirkung. Bei der Herstellung des Polsterkörpers wird der Körper aus luftdurchlässigem Material in definierter geometrischer Gestaltung zur Einlage und zur Hüllfolie gebracht und dann das Teil ausgeschäumt. Beim Schäumvorgang kann dann - wie erwähnt - die Luft durch den luftdurchlässigen Körper austreten. Das Schaummaterial dringt bereichsweise in die Poren des luftdurchlässigen Körpers ein und härtet aus. Es tritt demnach kein Schaum mehr an die Außenfläche des Polsterkörpers; denn eine zu große Füllmenge wird beim Schäumen automatisch über die Eindringtiefe in den Körper aus luftdurchlässigem Material ausgeglichen. Da kein Schaummaterial mehr austreten kann, entfällt die bisher erforderlich gewesene arbeitsaufwendige Nacharbeit (Säuberung der Fertigteile) und es entfällt weiterhin die Notwendigkeit Trennmittel einsetzen zu müssen.

Durch das Eindringen von Schaummaterial in den Körper aus luftdurchlässigem Material und dessen Aushärtung wird nicht nur eine gute Verankerung erzielt, sondern darüber hinaus erreicht, daß nunmehr Einziehungen oder Falten am Polsterkörper bei der Montage nicht mehr auftreten.

Die Maßnahme, den Körper aus luftdurchlässigem Material weichelastisch auszubilden, dient dem Zweck, Unregelmäßigkeiten an Randbereichen der Hüllfolie auszugleichen. Von besonderem Vorteil ist es im Hinblick auf eine gute Abdichtung ferner, daß der Körper aus luftdurchlässigem Material gemäß einer Weiterbildung der Erfindung am äußeren Randbereich umlaufend von einem Umbug der Umhüllungsfolie umgriffen ist.

In weiterer Ausgestaltung der Erfindung ist weiterhin vorgesehen, daß der Körper aus luftdurchlässigem Material an der Einlage und/oder an der Umhüllungsfolie befestigt ist, wobei der Körper aus luftdurchlässigem Material aus dem Zuschnitt eines textilen Flächengebildes oder eines offenporigen Schaumkunststoffs bestehen kann. Die Befestigung kann dabei z. B. durch eine Klebeverbindung erfolgen.

Nach einer bevorzugten Ausgestaltung der Erfindung ist vorgesehen, daß der Körper aus luftdurchlässigem Material aus einem offenporigen Kunststoffschaum besteht, der unmittelbar auf die Einlage aufgeschäumt ist. Ein unmittelbares Aufschäumen erfordert zwar den Einsatz einer zusätzlichen Schäumvorrichtung, in die die Einlage einzulegen und bereichsweise zu umschäumen ist, jedoch erscheint diese Maßnahme dennoch von Vorteil, weil sie es ermöglicht, den Körper aus luftdurchlässigem Material exakt zu dimensionieren und fest haftend an der Einlage zu positionieren. Dabei kann in weiterer Ausgestaltung vorgesehen werden, daß die Einlage an der Auflageseite des Polsterkörpers mit einem nach außen berichteten Flansch ausgebildet ist, der mit Löchern durchsetzt und mit offenporiger Kunststoffschaum umschäumt ist. Auch kann die gesamte Einlage oder zumindest wesentliche Bereiche derselben außenseitig mit offenporigem Kunststoffschaum umschäumt sein. Durch die Löcher im Flansch kann die Luft beim Schäumvorgang des Fertigteils bestimmungsgemäß entweichen. Das Umschäumen der Einlage selbst bringt aber einen zusätzlichen, wesentlichen Vorteil insofern, als nunmehr für die Einlage ein Material verwendet werden kann, an dem das Schaummaterial nicht sonderlich haftet, wobei das Material für die Herstellung der Einlage nunmehr z. B. aus einem preiswerten Polypropylen bestehen kann. Das Umschäumen der Einlage mit offenzelligem Schaum bewirkt eine geometrische Verankerung des Schaumes in bestimmten Bereichen, z. B. im Bereich des mit Löchern versehenen Flansches. Durch das Eindringen des Fertigschaummaterials in den offenporigen Schaum und durch das Aushärten beim Fertigschäumen ergibt sich dann eine harte Kapselung um die Einlage mit einer sehr guten Verklammerung zum Fertigschaum. Um diesen Erfindungsgedanken zu vervollkommen, kann weiterhin vorgesehen sein, daß partielle insbesondere Randzonen des Polsterkörpers benachbarte Bereiche der Einlage eine verdickte Kunststoffschaum-Auflage aufweisen. Durch diese Maßnahme lassen sich bestimmte Bereiche des Polsterkörpers, z. B. Griffmuldenbereiche bei Armlehnen, hinreichend hart ausbilden.

Ausführungsbeispiele der Erfindung werden nachfolgend anhand der Zeichnung näher erläutert. Es zeigen

Fig. 1   einen als Armlehne ausgebildeten Polsterkörper,

Fig. 2   einen Schnitt folgend der Linie II - II der Fig. 1,

Fig. 3   den gleichen Schnitt II - II nach Fig. 1 in einer abgewandelten Ausführungsform

Fig. 4   einen als Armlehne mit Griffmulde ausgebildeten Polsterkörper

Fig. 5   einen Schnitt folgend der Linie V - V der Fig. 4,

Fig. 6   den Auflagebereich eines Polsterkörpers.

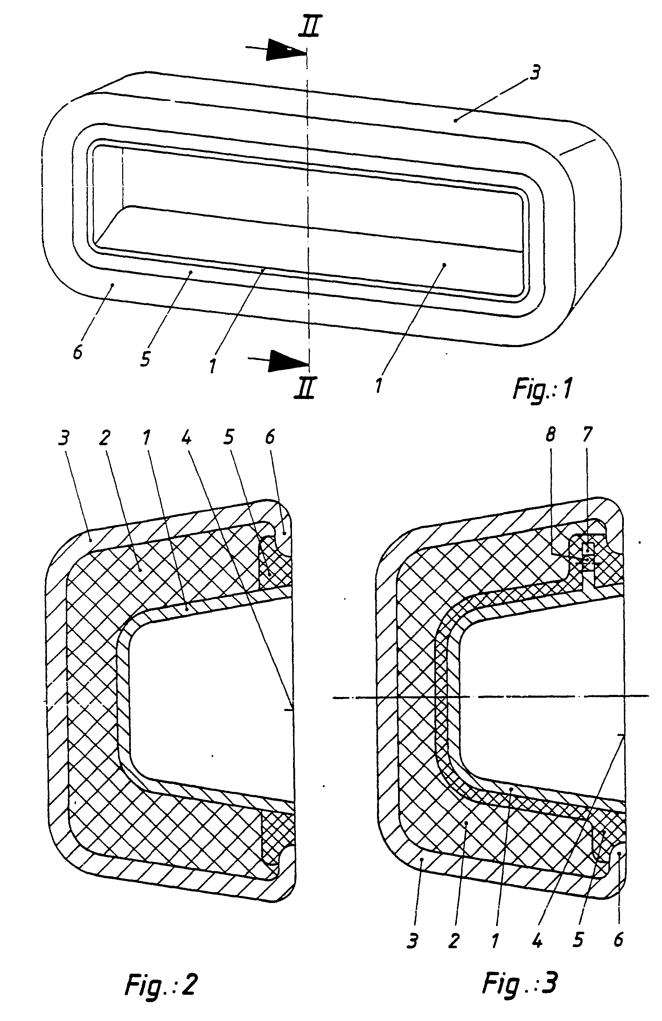

Der als Armlehne ausgebildete Polsterkörper nach Fig. 1 und 2 besteht aus einer als Hohlkörper ausgebildeten Einlage 1, einer aus Schaumkunststoff gebildeten Polsterschicht 2 und einer die Polsterschicht abdeckenden Hüllfolie 3.

Die Einlage 1 kann aus Blech oder aus einem Kunststoffspritzling bestehen, wobei im letzteren Falle ABS - (Acrylnitril-Butadien-Styrol) Polymerisate bevorzugt zur Anwendung kommen, da sie sich durch eine gute Schaumhaftung auszeichnen.

Die Hüllfolie 3 besteht aus einer vorgefertigten Kunststoffhaut, wobei die Herstellung beispielsweise im Rotationsverfahren erfolgen kann.

Der Polsterkörper nach Fig. 1 und 2 weist eine rückseitige Auflagefläche 4 auf, die z. B. an einer Karosseriewand zur Anlage kommt. Bei dem neuen Polsterkörper ist nun vorgesehen, daß der auflageseitige Randzonenbereich der Polsterschicht 2 aus einem im Schaumkunststoffmaterial verankerten Körper 5 aus luftdurchlässiger Material besteht. Dieser Körper 5 kann aus einem textilen Flächengebilde oder aus dem Zuschnitt eines luftdurchlässigen Schaumkunststoffes bestehen. Es ist wichtig, daß der Körper 5 fest (dicht) an der Einlage 1 einerseits und an der Hüllfolie 3 andererseits anliegt, weil der Körper 5 bei der Herstellung des Polsterkörpers dazu dienen soll, die beim Schäumen der Polsterschicht 2 verdrängte Luft an der Auflagefläche 4 entweichen zu lassen und den Schaum daran zu hindern, aus der Auflagefläche herauszutreten. In besonders einfacher Weise kann eine feste und dichte Anlage des Körpers 5 an der Einlage 1 und an der Hüllfolie 3 dadurch erreicht werden, daß der Körper 5, der in diesem Fall aus einem offenporigen Schaumkunststoff besteht, unmittelbar auf die Einlage 1 aufgeschäumt ist und daß die Hüllfolie mit einem umlaufenden Umbug 6 ausgebildet ist, welcher den luftdurchlässigen Körper 5 am äußeren Randbereich umgreift. Der Körper 5 sollte hinreichend weich sein, um Unregelmäßigkeiten am Randbereich der Hüllfolie 3 (z. B. in Form von Laufnasen an der Innenseite der Hüllfolie) auszugleichen und durch Gegeneinanderziehen von Hüllfolie 3 und Körper 5 eine Dichtfläche zu bilden. Beim Ausschäumen kann also die Luft durch den weichen luftdurchlässigen Körper 5 austreten und ein gewisser Anteil des Schaumkunststoffmaterials kann in die Poren des Körpers 5 eindringen und aushärten mit der Folge, daß der Randzonenbereich an der Auflagefläche 4 relativ hart und stabil ist.

Bei dem Ausführungsbeispiel nach Fig. 3 ist die gesamte Einlage 1 mit offenporigem Kunststoffschaum außenseitig umschäumt. Die Einlage kann dabei, wie in der oberen Schnitthälfte angedeutet, einen Flausch 7 aufweisen, der mit Löchern 8 zur Schaumverankerung versehen ist. Beim Ausführungsbeispiel nach Fig. 3 ist es wegen der Umschäumung der Einlage 1 mit offenzelligem Schaumkunststoff möglich, die Einlage aus einem preiswerteren Werkstoff (z. B. PP) herzustellen; denn die Schaumhaftung kann nunmehr dadurch erfolgen, daß das Material der Polsterschicht 2 beim Schäumvorgang in die offenen Poren des auf die Einlage 1 aufgeschäumten Schaummaterials eindringt, aushärtet und sich verankert.

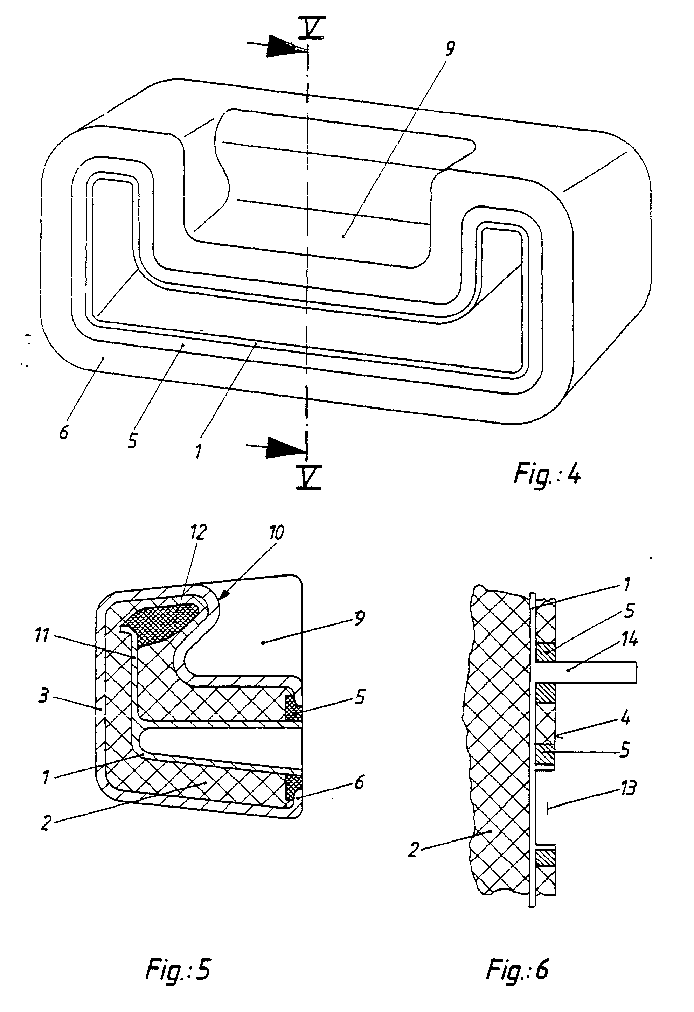

Beim Ausführungsbeispiel der Erfindung nach Fig. 4 und 5 ist der auch hier als Armlehne ausgebildete Polsterkörper mit einer Griffmulde 9 ausgebildet. Solche Polsterkörper werden z. B. an Fahrzeugtüren angebracht, um hier als Armauflage und Zuziehgriff gleichermaßen zu dienen. Die in diesem Polsterkörper eingebettete Einlage weist einen zum Griffbereich 10 der Griffmulde 9 hin ausgerichteten Steg 11 auf, der mit einer Kunststoffschaumauflage 12 versehen ist, und zwar auf der dem Griffbereich 10 zugewandten Seite. Bei der Kunststoffschaumauflage 12 kann es sich um das gleich offenporige Schaummaterial handeln, wie es für den luftdurchlässigen Körper 5 vorgesehen ist. In Fig. 5 sind zwei Körper 5 und 12 vorgesehen. Es ist aber natürlich möglich, die Körper 5 und 12 in der in Fig. 3 gezeigten Weise miteinander dadurch zu verbinden, daß eine Umschäumung der gesamten Einlage 1 vorgesehen wird.

Fig. 6 schließlich zeigt den auflageseitigen Randbereich eines Polsterkörpers mit einer in der Polsterschicht 2 eingelagerten Einlage 1, die eine Vertiefung 13 und einen aus der Ebene der Auflagefläche heraustretenden Zapfen 14 aufweist. Um den Zapfen 14, bei dem es sich z. B. um einen Gewindezapfen handeln kann, schaumfrei zu halten, ist um diesen ein außen mit der Auflagefläche 4 abschließender Körper 5 aus luftdurchlässigem Material gelegt. Ein entsprechender Körper 5 umgibt auch den Randbereich der Vertiefung 13.

## Patentansprüche

1. Polsterkörper, insbesondere für Fahrzeuge, mit einer formstabilen, aus Blech oder einem Kunststoffspritzling bestehenden Einlage (1) und mit einer die Einlage (1) außenseitig umgebenden Schicht (2) aus Schaumkunststoff, die durch eine aus einer Kunststoffhaut gebildeten Hüllfolie (3) abgedeckt ist, wobei die Auflageseite (4) des Polsterkörpers im wesentlichen hüllfolienfrei ausgeführt ist, dadurch gekennzeichnet, daß der auflageseitige Randzonenbereich der Polsterschicht (2) ganz oder teilweise aus einem zusätzlich im Schaumstoffmaterial verankerten Körper (5) aus weichelastischem, luftdurchlässigem Material besteht, welcher sowohl fest an der Außenseite der Einlage (1) als auch fest an der Innenseite der Hüllfolie (3) anliegt und bereichsweise, d. h. zur Auflageseite (4) hin abnehmend vom Schaumstoffmaterial durchsetzt ist.

2. Polsterkörper nach Anspruch 1, dadurch gekennzeichnet, daß der Körper (5) aus luftdurchlässigem Material am äußeren Randbereich von einem Umbug (6) der Hüllfolie (3) umgriffen ist.

3. Polsterkörper nach einem oder mehreren der Ansprüche 1 bis 2, dadurch gekennzeichnet, daß der Körper (5) aus luftdurchlässigem Material an der Einlage (1) und/oder an der Hüllfolie (3) befestigt ist.

4. Polsterkörper nach einem oder mehreren der Ansprüche 1 bis 3, dadurch gekennzeichnet, daß der Körper (5) aus luftdurchlässigem Material aus dem Zuschnitt eines textilen Flächengebildes oder eines offenporigen Schaumkunststoffs besteht.

5. Polsterkörper nach einem oder mehreren der Ansprüche 1 bis 3, dadurch gekennzeichnet, daß der Körper (5) aus luftdurchlässigem Material aus einem offenporigen Kunststoffschaum besteht, der unmittelbar auf die Einlage (1) aufgeschäumt ist.

6. Polsterkörper nach Anspruch 5, dadurch gekennzeichnet, daß die Einlage (1) an der Auflageseite des Polsterkörpers mit einem nach außen gerichteten Flansch (7) ausgebildet ist, der mit Löchern (8) durchsetzt und mit offenporigem Kunststoffschaum umschäumt ist.

7. Polsterkörper nach Anspruch 5 oder 6, dadurch gekennzeichnet, daß die gesamte Einlage (1) außenseitig mit offenporigem Kunststoffschaum umschäumt ist.

8. Polsterkörper nach einem oder mehreren der Ansprüche 5 bis 7, dadurch gekennzeichnet, daß partielle, insbesondere Randzonen des Polsterkörpers benachbarte Bereiche der Einlage (1) eine verdickte Kunststoffschaum-Auflage (12) aufweisen.

## Claims

1. An upholstered article, in particular for vehicles, having an insert (1) of stable form made of sheet metal or a synthetic plastics injection moulding and having a layer (2) of synthetic plastics foam material externally surrounding the insert (1), which coating is covered by an envelope foil (3) formed from a synthetic plastics material skin, the attachment side (4) of the upholstered article being made substantially free from envelope foil, characterised in that the marginal zone region on the attachment side of the upholstery layer (2) consists wholly or partially of a body (5) of softly elastic, air-permeable material additionally anchored in the foam material, which body both firmly rests on the outside of the insert (1) and firmly rests on the inside of the envelope foil (3) and is penetrated by zones, that is decreasingly towards the attachment side (4), by the foam material.

2. An upholstered article according to Claim 1, characterised in that the body (5) of air-permeable material is surrounded on the external marginal region by a bent-over portion (6) of the envelope foil (3).

3. An upholstered article according to any one or more of Claims 1 to 2, characterised in that the body (5) of airpermeable material is secured to the insert (1) and/or to the envelope foil (3).

4. An upholstered article according to any one or more of Claims 1 to 3, characterised in that the body (5) of air-permeable material comprises the cut-out shape of a flat textile structure or of an open-pored synthetic plastics foam material.

5. An upholstered article according to any one or more of Claims 1 to 3, characterised in that the body (5) of air-permeable material comprises an open-pored synthetic plastics foam material which is foamed directly on to the insert (1).

6. An upholstered article according to Claim 5, characterised in that the insert (1) is formed on the attachment side of the upholstered article with an outwardly directed flange (7) which is pierced with holes (8) and surrounded by foaming with open-pored synthetic plastics foam material.

7. An upholstered article according to Claim 5 or 6, characterised in that the entire insert (1) is surrounded by foaming on the exterior with open-pored synthetic plastics foam material.

8. An upholstered article according to any one or more of Claims 5 to 7, characterised in that zones of the insert (1) adjacent to partial, especially marginal, zones of the upholstered article have a thickened synthetic plastics foam material pad (12).

## Revendications

1. Corps rembourré, notamment pour des véhicules, comportant un insert (1) de forme stable, en tôle ou constitué par une pièce en matière plastique injectée, et une couche (2) de matériau cellulaire entourant l'insert (1) du côté extérieur, laquelle est recouverte par une feuille d'enveloppe (3) constituée par une peau en matière plastique, le côté d'appui (4) du corps rembourré étant pratiquement dépourvu de feuille d'enveloppe, caractérisé en ce que la zone de bord côté appui de la couche de rembourrage (2) est constituée, en totalité ou en partie, par un corps (5) en matériau élastique, souple, perméable à l'air, ancré dans le matériau cellulaire, qui est appliqué fermement sur le côté extérieur de l'insert (1) et également fermement sur le côté intérieur de la feuille d'enveloppe (3), et qui est traversé par endroits par du matériau cellulaire, c'est-à-dire en diminuant en direction du côté appui (4).

2. Corps rembourré selon la revendication 1, caractérisé en ce que l'élément (5) en matériau perméable à l'air est enserré par un repli (6) de la feuille d'enveloppe (3).

3. Corps rembourré selon l'une ou plusieurs des revendications 1 à 2, caractérisé en ce que le corps (5) en matériau perméable à l'air est fixé sur l'insert (1) et/ou sur la feuille d'enveloppe (3).

4. Corps rembourré selon l'une ou plusieurs des revendications 1 à 3, caractérisé en ce que le corps (5) en matériau perméable à l'air et constitué par un flan d'une structure surfacique textile ou d'un matériau cellulaire à pores ouverts.

5. Corps rembourré selon l'une ou plusieurs des revendications 1 à 3, caractérisé en ce que le corps (5) en matériau perméable à l'air est constitué par un matériau cellulaire à pores ouverts, qui est directement expansé sur l'insert (1).

6. Corps rembourré selon la revendication 5, caractérisé en ce que l'insert (1) est réalisé avec une collerette (7) orientée vers l'extérieur sur le côté appui du corps rembourré, laquelle est traversée de trous (8) et enrobée d'un matériau cellulaire à pores ouverts.

7. Corps rembourré selon la revendication 5 ou 6, caractérisé en ce que l'insert (1) est enrobé en totalité sur le côté extérieur d'un matériau cellulaire à pores ouverts.

8. Corps rembourré selon l'une ou plusieurs des revendications 5 à 7, caractérisé en ce que des zones partielles de l'insert (1), voisines notamment des zones de bord du corps rembourré, comportent une couche de matériau cellulaire (12) renforcée.

Fig.: 1

Fig.: 2

Fig.: 3

Fig.: 4

Fig.: 5

Fig.: 6